# EUROPEAN PATENT SPECIFICATION

(11) **EP 1 325 776 B1**
(45) Date of publication and mention of the grant of the patent: **21.02.2007**
(21) Application number: 01130914.3
(22) Date of filing: 27.12.2001
(51) Int. Cl.: B01J 19/00, C12Q 1/68, G01N 27/22, G01N 33/543

(54) **Semiconductor device for detecting organic molecules and method for measuring organic molecules using the same**
Halbleiter-Vorrichtung und deren Verwendung zur Identifizierung von organischen Molekülen
Appareil à semi-conducteur et son utilisation pour détecter des molécules organiques

(30) Priority: 27.12.2000 JP 2000399166
(43) Date of publication of application: 09.07.2003
(73) Proprietor: NIKON CORPORATION, Tokyo (JP)
(72) Inventor: Yagi, Takeshi, c/o Nikon Corporation, Chiyoda-ku, Tokyo (JP)
(74) Representative: Viering, Jentschura & Partner

(56) References cited:
- US-A- 5 846 708
- US-B1- 6 251 685
- US-B1- 6 325 977

## Description

### Technical Field

The present invention relates to an detecting an organic molecule target such as DNA, mRNA, or protein with a specific molecular structure and, more particularly, to an organic molecule detecting semiconductor element and device that combine a substrate on which an organic molecule probe is fixed with a substrate of a solid-state imaging element or device for capturing images of a target.

### Background and Summary of the Invention

Techniques for analyzing the DNA structure of plants and animals have been developed in recent years, such as those used in the Human Genome Project. Of the semiconductor devices used to detect organic molecules, a DNA chip in particular is known as a semiconductor device that is used for detecting organic molecules in order to analyze DNA structures.

With this DNA chip, a DNA or other organic molecule probe having a base sequence (i.e., molecular structure) corresponding to the base sequence of a target DNA is fixed on a substrate such as a slide glass. A sample containing the target DNA is poured onto this substrate. The DNA probe is complementarily bound to the DNA having the specified structure (the above-mentioned base sequence) out of all the DNA contained in the sample, and this bound DNA is optically detected with a microscope, solid-state imaging device, or the like.

The sample here first undergoes a treatment in which it is fluorescent-labeled, and a DNA probe having the corresponding base sequence is complementarily bound by a hybridization treatment or the like to fix the probe onto the substrate. When the fluorescent label is irradiated with excitation light having a specific wavelength (short wavelength), such as ultraviolet rays, the fluorescent label emits light (fluorescent light), and this fluorescent light is optically detected to indicate the DNA probe to which the sample is bound.

Methods for fixing a DNA probe to a substrate include chemically synthesizing a specific DNA base sequence, and spotting a substrate with natural DNA. The former involves utilizing semiconductor photolithography to chemically synthesize a DNA probe of a specific base sequence on the surface of a substrate (glass substrate). The latter involves spotting ("printing" or depositing) a substrate (slide glass, nylon sheet, etc.) with DNA of a specific structure extracted from natural DNA that serves as an indicator, and fixing the DNA to the substrate. With both of these methods, several types of DNA probe are generally fixed on a single chip at specific locations (the DNA probe disposition regions).

Meanwhile, a DNA is extracted from the specimen and poured onto the surface of a DNA chip after undergoing a treatment, such as proliferation or fluorescent labeling. As a result, if DNA of the specified target structure is contained in the sample, it is complementarily bound to the DNA probe of the corresponding base sequence (hybridization). After this, any remaining unnecessary sample is removed from the substrate, leaving only the complementarily bound DNA on the substrate. This DNA is fluorescent labeled.

Because this hybridized DNA of the specified target structure has been fluorescent labeled, when the substrate is irradiated with excitation light such as UV rays, the fluorescent label emits light, which can be optically measured with a microscope or solid-state imaging device, for instance.

In particular, to detect DNA of a specific structure that is complementarily bound to a DNA probe, a DNA probe of the specified structure may be fixed to the incident side surface of a semiconductor substrate of a CCD solid-state imaging device. Light from this DNA probe with a complementarily bound specific structure may be detected, which eliminates the need to use an expensive optical system such as a microscope, thereby making this method useful for DNA analysis.

A DNA chip with which DNA of a specific structure can be detected, in which a DNA probe of a specific structure is disposed on the incident side of a semiconductor substrate surface of a CCD solid-state imaging device is described in U.S. Patent 5,846,708, for example.

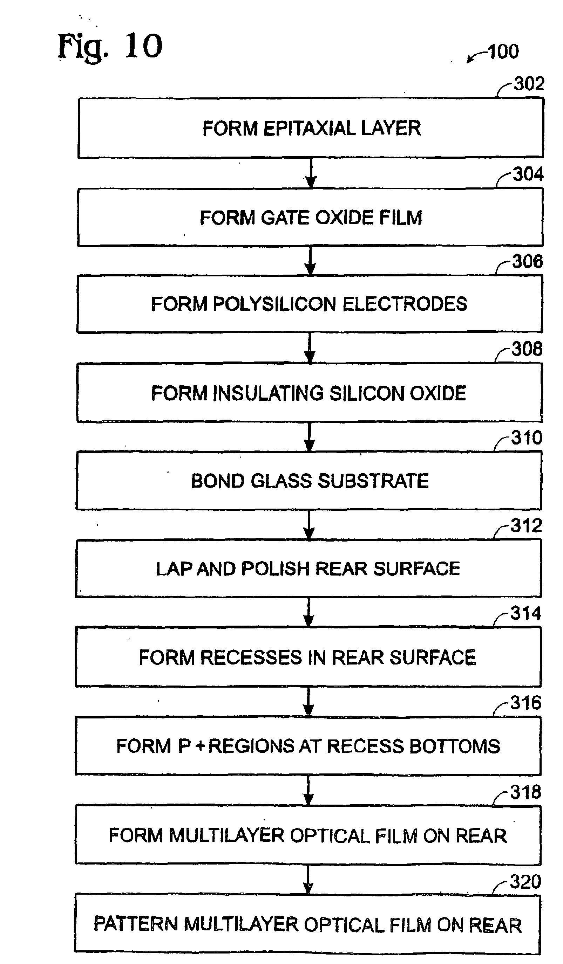

Fig. 10 illustrates a conventional DNA chip (organic molecule detecting semiconductor device) 10. This organic molecule detecting semiconductor device 10 has a photoelectric converter 12 formed on a silicon substrate 11. Recesses 16 are formed in a silicon oxide film 13 that is formed over photoelectric converter 12. DNA probes 21 are fixed in these recesses 16.

With the organic molecule detecting semiconductor device 10 structured as above, an interline (IT) method is employed as one transfer method for reading out to an external circuit the electrons photoelectrically converted on the side where the excitation light is incident (the incident side). This interline (IT) type of CCD solid-state imaging device is structured such that electrodes 14 are disposed on the incident side, and the fluorescent light emitted from the fluorescent label is detected by the underlying photoelectric converter 12.

The organic molecule detecting semiconductor device 10 having a conventional IT design in which DNA probes are disposed on the incident side suffers from a disadvantage. With the light-incident side being the side of the silicon substrate 11 on which the electrodes 14 are formed, the aperture area is lowered in proportion to the disposition of the electrodes 14. Increasing the aperture area becomes particularly difficult as the size of the element is reduced.

Furthermore, the following problem may be encountered with the conventional organic molecule detecting semiconductor device 10 in which DNA probes of a specific structure are fixed on the incident side. A chemical treatment with an organic substance is performed repeatedly with the above-mentioned method, in which a DNA base sequence is chemically synthesized on a substrate. Chemicals that are rarely used in the manufacture of semiconductors are used in large quantities in these organic chemical treatments. The purity of these chemicals is high enough to synthesize a DNA base sequence, but generally not high enough to satisfy the purity (EL) requirements of semiconductor manufacturing technology.

Consequently, if chemicals are used to synthesize a DNA base sequence on the surface of a silicon substrate on which solid-state imaging elements constituting a single pixel are formed, the effect of impurities contained in these chemicals could possibly diminish the performance of the solid-state imaging elements. The performance may be so diminished that it may not be possible to accurately detect the very faint fluorescent light produced from the target.

The present invention was conceived to overcome these limitations. The present invention provides a semiconductor element and a semiconductor device for detecting organic molecules with higher sensitivity and better durability with respect to synthetic treatment of organic molecule probes. The invention also provides a method for measuring organic molecules in which such an element and a device are used.

In one implementation, the semiconductor element for detecting organic molecules according to the present invention is such that a photoelectric converter is disposed on a first main side of a semiconductor substrate, and an organic molecule probe disposition region is formed on a second main side. This constitution eliminates the need to separately provide an optical system for reading the light produced from the target during analysis of organic molecules such as DNA, so the overall apparatus used for analysis of organic molecules is more compact and the manufacturing costs are lower. Also, since the photoelectric converters formed by semiconductor manufacturing technology and the organic molecule probes formed by organic chemical treatment are formed on mutually different sides, the adverse effect that the impurities in the chemicals used in the formation of the organic molecule probe would have on the photoelectric converter is eliminated.

As another aspect, the semiconductor element for detecting organic molecules is such that an optical filter is formed on the second main side, at least at the location corresponding to the organic molecule probe disposition region. In a measurement method in which fluorescent labels are attached to organic molecules with the specified structure, and these labels are irradiated with excitation light to generate fluorescent light, the above-mentioned optical filter cuts out the excitation light and only transmits the generated fluorescent light. As a result, it is possible to measure this fluorescent light while irradiating with the excitation light, which means that analysis of the organic molecules with the specified structure takes less time.

As further aspect, the semiconductor element for detecting organic molecules is such that the thickness of the semiconductor substrate, from the organic molecule probe disposition region on the second main side to the photoelectric converter on the first main side, is determined according to the depth of a CCD potential well. If the thickness of the semiconductor substrate is reduced while still ensuring enough thickness to form potential wells, the electrons generated by the fluorescent light on the second main side can be detected by the photoelectric converter on the first main side.

As yet another aspect, the semiconductor device for detecting organic molecules is such that a plurality of photoelectric converters are disposed on a first main side of a semiconductor substrate, and organic molecule probe disposition regions are provided on a second main side, corresponding at least to the photoelectric converters. This constitution eliminates the need to separately provide an optical system for reading the light produced from the target during analysis of organic molecules such as DNA, so the overall apparatus used for analysis of organic molecules is more compact and the manufacturing costs are lower. Also, since the photoelectric converter formed by semiconductor manufacturing technology and the organic molecule probe formed by organic chemical treatment are formed on mutually different sides, the effect that the impurities in the chemicals used in the formation of the organic molecule probe would have on the photoelectric converter is eliminated.

As still a further aspect, the semiconductor device for detecting organic molacules is such that a photoelectric converter region in which a plurality of the photoelectric converters are disposed is formed on the first main side, and the second main side serves as the side where light is incident, constituting a CCD solid-state imaging device. As a result, it is possible, for example, to configure a frame transfer type of CCD solid-state imaging device in which the light is incident on the back side, so the aperture area is higher (80% or higher). This increase in aperture area raises the sensitivity of the solid-state imaging device, allowing the very faint fluorescent light generated from the organic molecule probes to be measured.

As yet another aspect, the semiconductor device for detecting organic molecules is such that an optical filter is formed in at least the organic molecule probe disposition region on the second main side In a measurement method in which fluorescent labels are attached to organic molecules with the specified structure, and these labels are irradiated with excitation light to generate fluorescent light, the above-mentloned optical filter cuts out the excitation light and only transmits the generated fluorescent light. As a result it is possible to measure this fluorescent light while irradiating with the excitation light, which means that analysis of the organic molecules with the specified structure takes less time.

As still a further aspect, the semiconductor device for detecting organic molecules is such that a plurality of recesses corresponding to the organic molecule probe disposition region are provided on the second main side. This makes the spotting of the organic molecules of the specified structure easier and more certain.

As yet another aspect, a method for measuring organic molecules makes use of the semiconductor device of this invention, wherein said measurement method comprises a step of fixing at least one type of organic molecule probe in the organic molecule probe disposition region on the second main side, a step of pouring a fluorescent-labeled sample onto the second main side and bonding a target having a molecular structure corresponding to the organic molecule probe included in said sample to said organic molecule probe, a step of irradiating the second main side to which the organic molecule probe has been fixed with excitation light, and a step of detecting the fluorescent light produced by irradiation with the excitation light by means of the photoelectric converters disposed on the first main side, and outputting an optical signal,

As still a further aspect, a measurement method is such that organic molecule probes with different molecular structures in each region are fixed to the plurality of organic molecule probe disposition regions disposed on the second main side. Since organic molecule probes with different molecular structures are fixed in each region (corresponding to a unit pixel), it is possible to detect a plurality of different types of target DNA with a single treatment.

### Brief Description of the Drawings

Fig. 1 is a cross section of an organic molecule detecting semiconductor device of a first embodiment;

Fig. 2 is a diagram of the organic molecule detecting semiconductor device of the first embodiment when housed in a package;

Fig. 3 is a simplified block diagram of the structure of the organic molecule detecting semiconductor device of the first embodiment;

Figs. 4A and 4B are diagrams illustrating how DNA is analyzed using the organic molecule detecting semiconductor device of the first embodiment;

Figs. 5A-5C are detail diagrams illustrating how DNA is analyzed using the organic molecule detecting semiconductor device of the first embodiment;

Figs. 6A-6E are cross sections illustrating the steps of manufacturing the organic molecule detecting semiconductor device of the first embodiment;

Figs. 7A and 7B are oblique views schematically illustrating the organic molecule detecting semiconductor device of the first embodiment;

Fig. 8 is a diagram of the organic molecule detecting semiconductor device of the second embodiment when housed in a package;

Figs. 9A and 9B are cross sections illustrating the steps of manufacturing the organic molecule detecting semiconductor device of the second embodiment;

Fig. 10 is a flow diagram of a method for manufacturing the organic molecule detecting semiconductor device of the first embodiment; and

Fig. 11 is a cross section of a conventional organic molecule detecting semiconductor device 10.

### Detailed Description of Preferred Embodiments

### First Embodiment

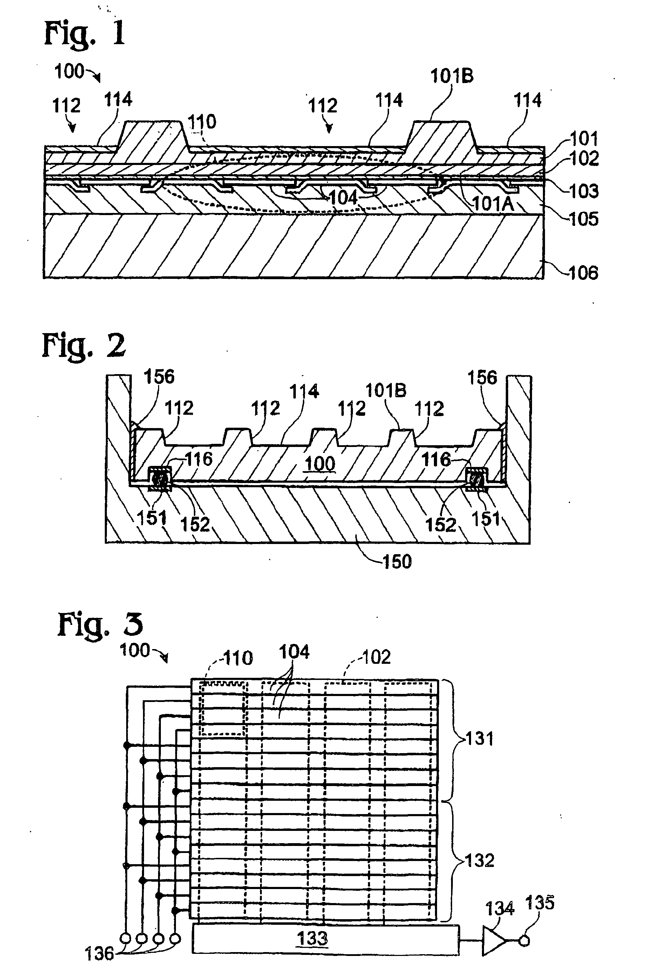

A first embodiment of the present invention will now be described with reference to Figs. 1 to 8.

An organic molecule detecting semiconductor device 100 of the first embodiment is configured as a frame transfer (FT) type of CCD solid-state imaging device in which numerous pixels 110 (one shown in Fig. 1) each have a photoelectric converter. A single pixel 110 here corresponds to a single CCD solid-state imaging element having a photoelectric converter.

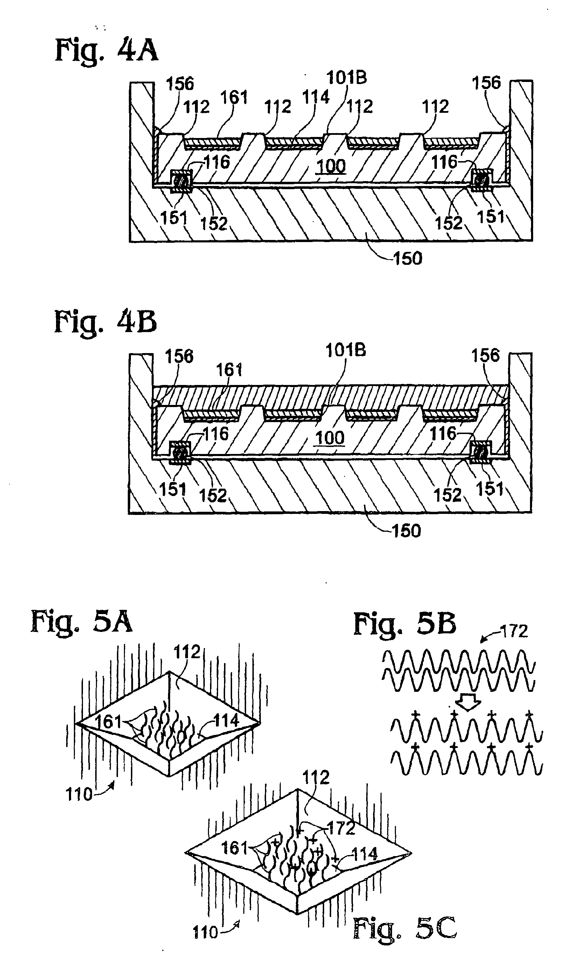

Numerous recesses 112 are formed in a major surface 101B (sometimes referred to as back side 101 B) of a silicon substrate 101, and each recess 112 corresponds to a pixel 110 having photoelectric converters. An optical filter/DNA fixing film 114 is formed on the inner or bottom surfaces of these recesses 112. In this embodiment, the bottoms of the recesses 112 serve as organic molecule probe disposition regions for fixing organic molecule probes (e.g., the DNA probes 161, Figs. 4A, 4B), as described below in greater detail.

The silicon substrate 101 has a thickness d1 from major surface 101B to the bottoms of the recesses 112 of about 10 to 20 µm. This thickness d1 is determined according to the depths of the potential wells of the pixels 110.

The optical filter/DNA fixing film 114 formed at the bottom of the recesses 112 cuts out excitation light and transmits fluorescent light. Also, the optical filter/DNA fixing film 114 is positioned between the pixels 110 (including their photoelectric converters) and the DNA probes 161, and this optical filter/DNA fixing film 114 makes it possible to measure the fluorescent light from the DNA probes 161 during irradiation with excitation light (such as ultraviolet rays) in the course of measuring the DNA 172 with a specific structure (see Fig. 5) bound to the DNA probes 161.

As shown in Fig. 2, this organic molecule detecting semiconductor device 100 is housed in a ceramic package 150. The electrodes 116 of the organic molecule detecting semiconductor device 100 are electrically connected by bumps 152 to electrodes 151 on the package 150 side. The organic molecule detecting semiconductor device 100 and the package 150 are bonded together in a water-tight seal with a resin adhesive agent 156.

Fig. 3 shows the simplified circuit structure of the organic molecule detecting semiconductor device 100. As shown in this drawing, the organic molecule detecting semiconductor device 100 is an FT-type of CCD solid-state imaging device in which the light is incident on the back side, and the main side (the 101B side, or the second main side) is divided into a photoelectric converter region 131 and an accumulator 132. With this organic molecule detecting semiconductor device 100, the optical signal obtained at the various pixels 110 in the photoelectric converter region 131 is transferred to the accumulator 132 by drive current (such as a four-phase drive current) from terminals 136, after which this signal is outputted through a horizontal reader 133 and an amplifier 134 to an output terminal 135.

This organic molecule detecting semiconductor device 100, with its back side-incident FT type of CCD solid-state imaging device, affords a high aperture area (80% or higher), and is therefore favorable for detecting very faint fluorescent light from the DNA 172 (Fig. 5), the specific structure of which will be discussed in detail below.

The organic molecule detecting semiconductor device 100 thus configured is a back side-incident CCD solid-state imaging device, and frame transfer (FT) is used as the transfer method for reading the electrons photoelectrically converted on the incident side (i.e., the rear side). Because a back side-incident CCD solid-state imaging device has no electrodes or the like formed on the incident side, and because the pixel region (including the photoelectric converters) is the same as the transfer region, the aperture area can be greater than with other solid-state imaging devices.

Therefore, with the organic molecule detecting semiconductor device 100, as will be discussed in detail below, it is possible to detect very faint fluorescent light generated when fluorescent-labeled DNA is irradiated with short wavelength light such as ultraviolet rays.

Also, with the organic molecule detecting semiconductor device 100, the semiconductor (e.g., silicon) substrate 101 at the bottom of the recesses 112 includes a thin film with a thickness of about 10 to 20 µm, so short wavelength light with a large absorption coefficient is almost completely absorbed and converted into electrons in the vicinity of the incident side (i.e, the back side). Moreover, there is a reduced probability that these electrons will "disappear" through rebonding within the substrate by the time they reach the pixels (including the photoelectric converters), which would lower the sensitivity, or that the electrons produced by light incident at different places on the incident side will become admixed, which would lower the resolution.

Figs. 4A-4B and 5A-5C illustrate operation of a DNA measurement method in which the organic molecule detecting semiconductor device 100 Is used.

With the organic molecule detecting semiconductor device 100 structured as described above, DNA probes 161 are fixed by spotting them (e.g., "printing" or depositing - as is known in the art of testing arrays of DNA samples) at the bottoms of the recesses 112 (i.e., the organic molecule probe disposition regions - Figs. 4A and Fig. 5A), The recesses 112 correspond to the various pixels 110. As described in detail below, DNA probes 161 with different base sequences from a DNA library may be fixed at the bottoms of these recesses. As a result of this treatment, the DNA probes 161 having base sequences of the specified structure are fixed In the organic molecule probe disposition regions (i.e, at the bottoms of the recesses 112 in this embodiment). Spotting is favorable because the organic molecule probe disposition regions are at the bottoms of the recesses 112 of the organic molecule detecting semiconductor device 100.

Meanwhile, Fig. 5B illustrates that the DNA (target) 172 of the specified structure contained in the sample is extracted from the specimen and subjected to a treatment, such as proliferation or fluorescent labeling, to form a labeled DNA (target) 172 (indicated by the "+" symbol).

After this, the sample containing the labeled DNA (target) 172 of the specified structure is poured onto the incident side (side 101B) of the organic molecule detecting semiconductor device 100 (Fig. 4B).

If the labeled DNA (target) 172 of the specified structure corresponding to the DNA probes 161 is contained in the sample at this point, as shown in Fig. 5C, complementary binding occurs between the DNA probes 161 and the labeled DNA 172 of the specified structure. When the extra sample is washed away, such as by washing it with water, the fluorescent labeled DNA 172 of the specified structure remains on the incident side (side 101B) of the organic molecule detecting semiconductor device 100.

In this state, the incident side (side 101 B) of the organic molecule detecting semiconductor device 100 is irradiated with excitation light (such as UV rays) while the signals from the pixels 110 are read. The excitation light causes fluorescent light to be emitted from any fluorescent labeled DNA 172 of the specified structure remaining on the incident side (side 101 B) of the organic molecule detecting semiconductor device 100.

The optical filter/DNA fixing film 114 at the bottoms of the recesses 112 (the organic molecule probe disposition regions) is selected to cut out or filter out the wavelength of the excitation light, which allows the fluorescent light of the DNA (target) 172 of the specified structure to be measured. In particular, fluorescent light from the DNA (target) 172 of the specified structure can be measured during irradiation with excitation light, which means that the DNA measurement takes less time.

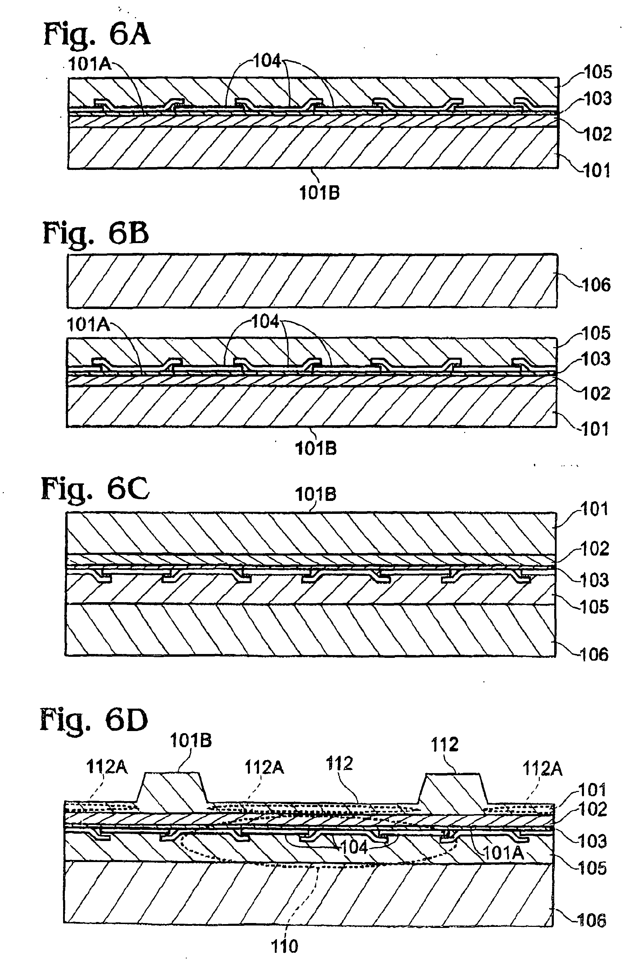

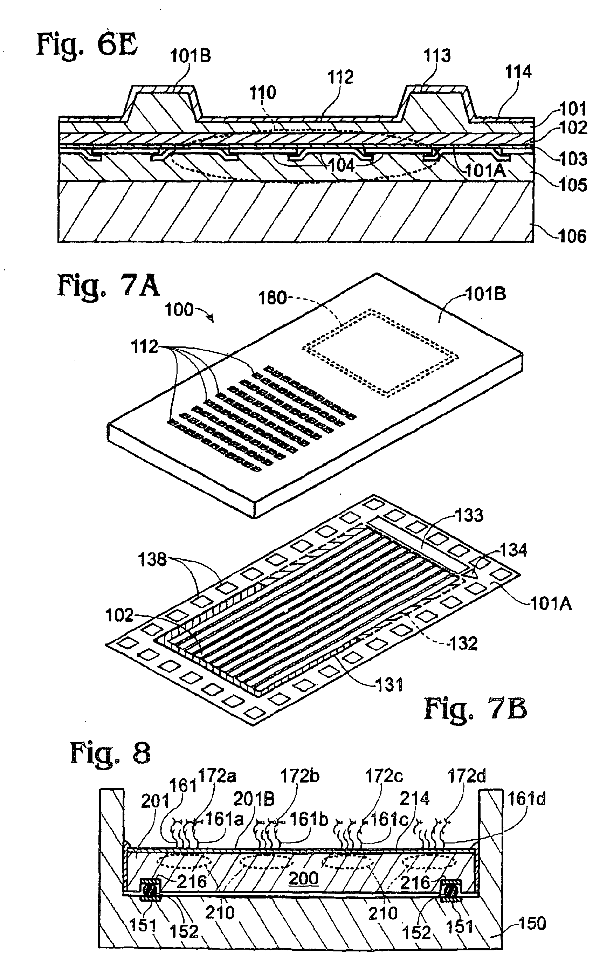

A method for manufacturing the organic molecule detecting semiconductor device 100 will be described with reference to Figs. 6 and 10. Specifically, the following description relates to a method 300 (Fig. 10) for manufacturing the pixels 110 on the 101A side (first main side) of the organic molecule detecting semiconductor device 100 and the recesses 112 on the 101B side (second main side).

A first step 302 is to form an epitaxial layer 102 (e.g., a silicon epitaxial growth layer), in which p-type impurities have been introduced at a low concentration (about 1 × 10¹⁴ cm⁻³), to a selected thickness using an epitaxial growth apparatus, over the top of a silicon substrate in which p-type impurities have been introduced at a high concentration (about 1 × 10²⁰ cm⁻³).

In a next step 304, a silicon oxide film 103 that constitutes a gate oxide film is formed over the epitaxial layer 102. Then in a step 306 electrodes 104 (e.g., transfer electrodes with a two-layer structure) are formed of polysilicon on silicon oxide film 103. Electrodes 104 function as a charge transfer component. In a step 308 an insulating silicon oxide film 105, such as PSG (phosphosilicate glass) or BPSG (borophosphosilicate glass), is then formed as a passivation film, thereby defining pixels (including photoelectric converters) 110 on the front (first main side) 101A of the silicon substrate 101. Fig. 6A shows the structure of the device obtained in the steps so far.

In a next step 310, a glass substrate 106 is bonded to the surface of the silicon oxide film 105 (Fig. 6B) with a resin-based adhesive (such as a silicon-based adhesive).

In a step 312, the rear (second main side) 101B of the silicon substrate 101 is then lapped and polished (e.g., mechanical polishing) to the required film thickness using a polishing apparatus. Fig. 6C shows the structure of the device obtained in the steps so far, illustrated in a vertically flipped orientation relative to Figs. 6A and 6B.

In a step 314 the recesses 112 are formed by dry etching, for instance, on the rear (second main side) 101B of the silicon substrate 101. During the formation of the recesses 112, the rear (second main side) 101B is coated with an etching resist (not shown in the drawings), and this etching resist is positioned so that the apertures thereof line up with the pixels 110 on the front (first main side) 101A on the front and back of the silicon substrate 101. As a result, the pixels 110 on the front (first main side) 101A correspond with the bottoms (organic molecule probe disposition regions) of the recesses 112 on the rear (second main side) 101B.

In the formation of the recesses 112, the etching is continued until the thickness d1 of the silicon substrate 101 at the bottoms of the recesses 112 is about 10 to 20 µm. This thickness d1 ensures that adequate potential wells will be formed. Wet etching may also be performed in the formation of the recesses 112. If wet etching is performed, a silicon nitride film may be formed ahead of time on the rear (second main side) 101B, and this film pattern used as a mask. The thickness d1 of the silicon substrate 101 can be controlled more easily by preforming a stopper layer, as is known in the art.

In a step 316 a p+ region 112A is formed by the injection of boron at the bottoms of the recesses 112 (the organic molecule probe disposition regions). This p+ region 112A serves to prevent electrons from being trapped and allows light to be detected at higher sensitivity. Hence this step may be referred to as a high-sensitivity treatment. The injection of boron for this high-sensitivity treatment may be performed over the entire rear (second main side) 101B. Instead of injecting boron, a thin platinum film (0.001 to 0.002 µm, for example) may be formed for the purpose of this high-sensitivity treatment. Fig. 6D shows the structure of the device obtained in the steps so far.

In a step 318 a multilayer film 113 is formed so as to cover the entire rear (second main side) 101B. The multilayer film 113 is formed to double as an optical filter that transmits fluorescent light and cuts out UV rays, and also as a glass substrate on which the DNA probes 161 can be fixed.

This multilayer film 113 is designed to cut out light of a specific wavelength and has, for example, a three-layer structure including a silicon oxide film at the top, an aluminum oxide film in the middle, and a magnesium oxide film at the bottom (layers not shown in the drawings). As long as the uppermost layer of this multilayer film 113 is a film to which the DNA probes 161 can be fixed (such as a silicon oxide film), there are no restrictions on the materials of the other films. Specifically, an aluminum oxide film, magnesium oxide film, titanium oxide film, or the like should be suitably laminated so as to function as a filter for cutting out light of the specified wavelength. The thicknesses of the films are determined as dictated by the wavelength of the light to be cut. The multilayer film 113 may instead comprise only two layers, or it may comprise four or more layers. Fig. 6E shows the structure of the device obtained in the steps so far.

Finally, in a step 320 patterning is performed so as to leave the multilayer film 113 only at the bottom of the recesses 112 (the organic molecule probe disposition regions), which yields the organic molecule detecting semiconductor device 100 with the structure shown in Fig. 1.

In measuring the DNA of the specified structure, the organic molecule detecting semiconductor device 100 structured as above is subjected to saponification with sodium hydroxide or the like, and to a coating treatment with poly-L-lysine or the like, so that the DNA probes 161 will be fixed more securely to the optical filter/DNA fixing film 114. The peripheral circuits of the pixels 110 and so forth are not contaminated by these chemicals since the front (first main side) 101A of the silicon substrate 101 is protected by the glass substrate 106.

Also, because the optical filter/DNA fixing film 114 remains only at the bottoms of the recesses 112 (the organic molecule probe disposition region) as mentioned above, the DNA probes 161 are prevented from adhering to other regions where they are not needed Alternatively, if the precision of the spotting (i.e., depositing) of the DNA probes 161 (Fig. 5) is high, the optical filter/DNA fixing film may be left over the entire rear (second main side) 101 B of the silicon substrate 101 without patterning the multilayer film 113.

Fig. 7A is an oblique view schematically illustrating the rear (second main side) 101 B of the organic molecule detecting semiconductor device 100. Fig. 7B is an oblique view schematically illustrating the front (first main side) 101A of the organic molecule detecting semiconductor device 100.

Fig. 7A illustrates the recesses 112 (the organic molecule probe disposition regions), which are aligned with corresponding pixels 110 (Fig. 1) having photoelectric converters (not shown) that double as readers. The pixels and photoelectric converters form an FT type of CCD solid-state imaging device over photoelectric converter region 131 (Fig. 7B), the device including accumulator 132 for accumulating the signal charges sent from the pixels 110 of the photoelectric converter region 131.

A horizontal reader 133 and an amplifier 134 are connected to the accumulator 132. Numerous pads 138 for inputting drive current or outputting optical signals are disposed around the periphery of the photoelectric converter region 131 and the accumulator 132.

The portions of the front (first main side) 101A aligned with the recesses 112 disposed on the rear (second main side) 101B correspond to the photoelectric converter region 131. In the illustrated embodiment, no recesses 112 are disposed in the portion of the rear (second main side) 101B aligned with the accumulator 132. Accordingly, a signal processing circuit 180 that is electrically connected to the various circuits may be disposed in the portion of the rear (second main side) 101B aligned with the accumulator 132. Alternatively, the signal processing circuit 180 may be disposed on the front (first main side) 101A. Further, the above-mentioned numerous pads 138 may be disposed on the rear (second main side) 101B.

The signal processing circuit 180 must be shielded from light to prevent incident light from causing undesired photoelectric conversion that alters operation of the signal processing circuit 180. In thus shielding the signal processing circuit 180 from light, a light blocking film may, for example, be formed so as to cover the signal processing circuit 180 portion of the front (first main side) 101A of the silicon substrate 101, or the signal processing circuit 180 portion may be covered with the package 150 (Fig. 2).

In the first embodiment given above, the description was of an example in which the DNA probes were fixed by spotting at the bottoms of the recesses 112 (the organic molecule probe disposition regions), but the DNA probes may also be synthesized by semiconductor photolithography in these organic molecule probe disposition regions.

Also, in the first embodiment given above, the description was of an example in which a single recess 112 was provided corresponding to a single pixel 110, but a single recess 112 may also be provided corresponding to a plurality of pixels 110.

### Second Embodiment

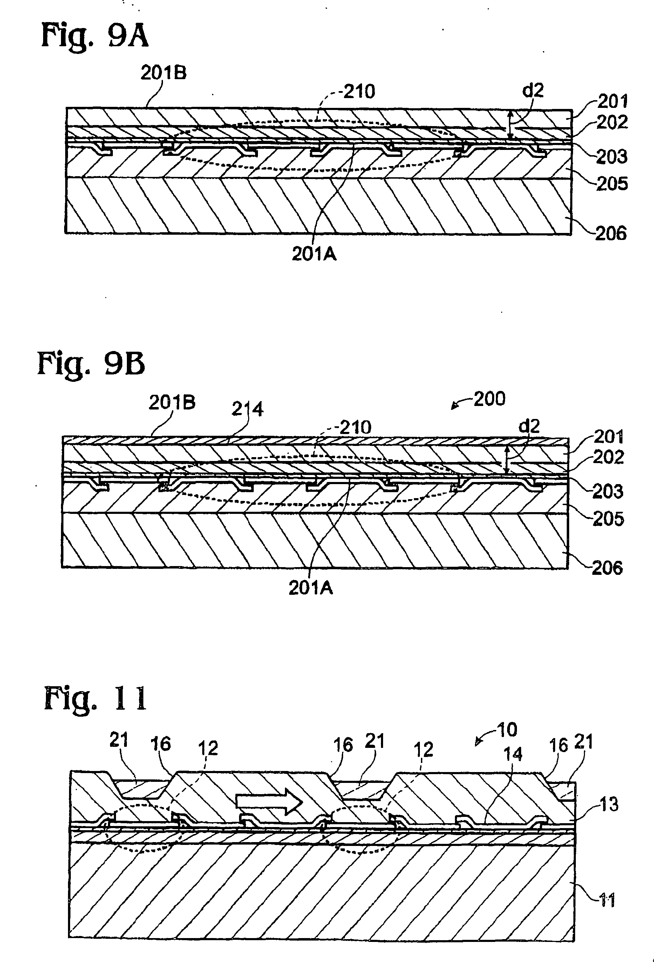

The organic molecule detecting semiconductor device 200 of a second embodiment of the present invention will now be described through reference to Figs. 8, 9A, and 9B.

As shown in Figs. 9A and 9B, the organic molecule detecting semiconductor device 200 in this second embodiment is an organic molecule detecting semiconductor device of a type in which the DNA probes are chemically synthesized on the incident side (second main side) 201B of a silicon substrate 201. The difference from the organic molecule detecting semiconductor device 100 in the first embodiment described above is that no spotting recesses are provided on the rear (second main side) 201B. The rest of the structure is the same as that of the organic molecule detecting semiconductor device 100 in the first embodiment, and will therefore not be described in detail.

The organic molecule detecting semiconductor device 200 of this second embodiment is also a frame transfer (FT) type of CCD solid-state imaging device (Fig. 3). As a result, the detection sensitivity for fluorescent light produced when fluorescent-labeled DNA is irradiated with short-wavelength light (e.g., UV rays) is also increased with the organic molecule detecting semiconductor device 200.

With this organic molecule detecting semiconductor device 200, the semiconductor (e.g., silicon) substrate 201 includes a thin film of about 10 to 20 µm in thickness, which makes it easier for the electrons generated in the vicinity of the incident side (back side) 201 B to reach the light receiving elements (diffusion layer, electrodes, etc.) on the front side 201A.

Fig. 8 shows that the DNA probes 161 are fixed by synthesizing them in a specific region of the rear (second main side) 201B at places corresponding to the pixels 210 on the front 201 A. In this case, as shown in the drawings, different DNA probes (161a to 161d) can be fixed in each region corresponding to the pixels 210.

An optical filter/DNA fixing film 214 is formed over the entire surface of the incident rear (second main side) 201B. This optical filter/DNA fixing film 214 makes it possible to measure the fluorescent light from the DNA probes 161a to 161d during irradiation with the excitation light (such as ultraviolet rays) in the course of measuring the DNA 172 (e.g., 172a to 172d) with a specific structure.

With this organic molecule detecting semiconductor device 200 of the second embodiment, there is no need for an optical system for reading the fluorescent light from the DNA (target) 172 of the specified structure, so the overall apparatus required for analysis of DNA of the specified structure is more compact.

A method for manufacturing the organic molecule detecting semiconductor device 200 will now be described through reference to Figs. 9A and 9B.

Fig. 9A illustrates the step conducted after the manufacturing step of the first embodiment (Fig. 6C).

The organic molecule detecting semiconductor device 200 is applied mainly to a DNA measurement method in which the DNA probes 161 are chemically synthesized, so the rear (second main side) 201B is flat, and the silicon substrate 201 is etched to a thickness d2 of 10 to 20 µm.

Next, a multilayer film 214 (i.e., the optical filter/DNA fixing film 214) is formed so as to cover the entire rear (second main side) 201B. The multilayer film 214 doubles as an optical filter that transmits fluorescent light and cuts out UV rays, and as a film on which the DNA probes 161 can be fixed. This optical filter/DNA fixing film 214 has the same structure as the film 114 in the first embodiment. Fig. 9B shows the structure of the device obtained in the steps so far.

As shown in Fig. 8, the organic molecule detecting semiconductor device 200 structured as above is housed in a ceramic package 150.

In this second embodiment, the description is of an example in which the DNA probes are formed by chemically synthesizing base sequences on the rear (second main side) 201B, but the rear (second main side) 201B may also be spotted with natural DNA. In this alternative case, no recesses 112 are formed as they were with the organic molecule detecting semiconductor device 100 in the first embodiment. Accordingly, the optical filter/DNA fixing film 214 may be formed only at the portions corresponding to the pixels 210, and the DNA probes 161 can then be fixed at just these portions during spotting. Here, the patterning of the optical filter/DNA fixing film 214 should be accurately aligned with the pixels 210 on the front (first main side) 201A.

As described above, the organic molecule detecting semiconductor devices 100 and 200 in the first and second embodiments are each a back-incident, frame transfer type of CCD solid-state imaging device, so the region where the DNA probes are disposed can be completely Isolated from the region where the signal processing component is formed.

As a result, every time DNA of the specified structure is detected on the rear (second main side) of the organic molecule detecting semiconductor devices 100 and 200 where the DNA probes are fixed, the corresponding DNA probes can be removed by chemical treatment (treatment with stripping chemicals) and the other DNA probes refixed, which makes it possible to measure the DNA of the specified structure by the repeated use of the organic molecule detecting semiconductor devices 100 and 200.

Also, in the first and second embodiments given above, the description was of an example in which the DNA probes 161 were fixed to the rear sides (second main sides) 101 B and 201B of the organic molecule detecting semiconductor devices 100 and 200 in order to detect the DNA of the specified structure, but other organic molecule probes may also be fixed, such as mRNA probes, or protein probes, and the organic molecule detecting semiconductor devices 100 and 200 may be used in the measurement of the mRNA, protein, or the like of the specified structure.

Also, the above embodiments were examples of using a frame transfer type of CCD solid-state imaging device as the organic molecule detecting semiconductor devices 100 and 200, but the present invention can also be applied to a CMOS solid-state imaging device or other device as long as it is a back-incident type of solid-state imaging device.

It will be appreciated that a so-called full-frame transfer type of solid-state imaging device is encompassed by the above-mentioned frame transfer type of solid-state imaging device.

### Effect of the Invention

As described above, an aspect of the present invention is that there is no need to separately provide an optical system for reading the light produced from the target during analysis of organic molecules such as DNA, so the overall apparatus used for analysis of organic molecules is more compact and the manufacturing costs are lower. Also, since the photoelectric converter formed by semiconductor manufacturing technology and the organic molecule probe formed by organic chemical treatment are formed on mutually different sides, the effect that the impurities in the chemicals used in the formation of the organic molecule probe would have on the photoelectric converter is eliminated.

Another aspect of the present invention is that it is possible to measure fluorescent light while irradiating with excitation light, which means that analysis of the organic molecules (such as DNA) with the specified structure takes less time.

As a further aspect of the invention, when a CCD is used for charge transfer, the electrons produced on the incident side can be detected at high sensitivity by the photoelectric converter on the first main side while ensuring the thickness required for the formation of potential wells.

As yet another aspect of the invention, a back-incident frame transfer type of CCD solid-state imaging device is constituted, so the aperture area is higher (80% or higher), and the very faint fluorescent light produced from the organic molecule probe can be measured at good sensitivity.

Still further aspects of the Invention are that spotting is made easier and more certain, analysis of organic molecule of a specific structure can be performed at high sensitivity and in a short time, and organic molecule probes of different base sequences can be fixed, so it is possible to detect a plurality of types of target (DNA) with a single process.

In view of the many possible embodiments to which the principles of this invention may be applied, it should be recognized that the detailed embodiments are illustrative only and should not be taken as limiting the scope of the invention.

## Claims

1. A semiconductor element formed with a semiconductor substrate for detecting organic molecules, the semiconductor element having a photoelectric converter and an organic molecule probe disposition region, wherein
the photoelectric converter is disposed on a first main side of the semiconductor substrate and an organic molecule probe disposition region is disposed on a second main side of the semiconductor substrate.

2. The semiconductor element of claim 1, further comprising:
an optical filter formed on the second main side at least at the location corresponding to the organic molecule probe disposition region.

3. The semiconductor element of claim 2 in which the semiconductor substrate has a thickness from the organic molecule probe disposition region on the second main side to the photoelectric converter on the first main side determined according to the depth of a CCD potential well.

4. The semiconductor element of claim 1 in which the semiconductor substrate has a thickness from the organic molecule probe disposition region on the second main side to the photoelectric converter on the first main side determined according to the depth of a CCD potential well.

5. A semiconductor device formed with a semiconductor substrate for detecting organic molecules, comprising:
a plurality of photoelectric converters disposed on a first main side of the semiconductor substrate and organic molecule probe disposition regions provided on a second main side in alignment with the photoelectric converters.

6. The semiconductor device of claim 5 in which the semiconductor substrate includes a photoelectric converter region in which the plurality of the photoelectric converters are disposed on the first main side as a CCD solid-state imaging device.

7. The semiconductor device of claim 6 further comprising an optical filter formed in at least the organic molecule probe disposition regions on the second main side of the semiconductor substrate.

8. The semiconductor device of claim 7 further comprising a plurality of recesses corresponding to the organic molecule probe disposition regions are provided on the second main side.

9. The semiconductor device of claim 6 further comprising a plurality of recesses corresponding to the organic molecule probe disposition regions are provided on the second main side.

10. The semiconductor device of claim 5 further comprising an optical filter formed in at least the organic molecule probe disposition regions on the second main side of the semiconductor substrate.

11. The semiconductor device of claim 5 further comprising a plurality of recesses corresponding to the organic molecule probe disposition regions are provided on the second main side.

12. A method for measuring organic molecules using a semiconductor device as recited in claim 5, comprising the steps of:
fixing at least one type of organic molecule probe in the organic molecule probe disposition region on the second main side;
placing a fluorescent-labeled sample onto the second main side and bonding to the organic molecule probe a target in the sample having a molecular structure corresponding to the organic molecule probe ;
irradiating with excitation light the second main side to which the organic molecule probe has been fixed; and
detecting the fluorescent light produced by irradiation with the excitation light by means of the photoelectric converters disposed on the first main side, and outputting an optical signal.

13. A method for measuring organic molecules using a semiconductor device as recited in claim 6, comprising the steps of:
fixing at least one type of organic molecule probe in the organic molecule probe disposition region on the second main side;
placing a fluorescent-labeled sample onto the second main side and bonding to the organic molecule probe a target in the sample having a molecular structure corresponding to the organic molecule probe ;
irradiating with excitation light the second main side to which the organic molecule probe has been fixed; and
detecting the fluorescent light-produced by irradiation with the excitation light by means of the photoelectric converters disposed on the first main side, and outputting an optical signal.

14. A method for measuring organic molecules using a semiconductor device as recited in claim 7, comprising the steps of:
fixing at least one type of organic molecule probe in the organic molecule probe disposition region on the second main side;
placing a fluorescent-labeled sample onto the second main side and bonding to the organic molecule probe a target in the sample having a molecular structure corresponding to the organic molecule probe ;
irradiating with excitation light the second main side to which the organic molecule probe has been fixed; and
detecting the fluorescent light produced by irradiation with the excitation light by means of the photoelectric converters disposed on the first main side, and outputting an optical signal.

15. A method for measuring organic molecules using a semiconductor device as recited in claim 8, comprising the steps of:
fixing at least one type of organic molecule probe in the organic molecule probe disposition region on the second main side;
placing a fluorescent-labeled sample onto the second main side and bonding to the organic molecule probe a target in the sample having a molecular structure corresponding to the organic molecule probe ;
irradiating with excitation light the second main side to which the organic molecule probe has been fixed; and
detecting the fluorescent light produced by irradiation with the excitation light by means of the photoelectric converters disposed on the first main side, and outputting an optical signal.

16. The method for measuring organic molecules of claim 12, in which organic molecule probes with different molecular structures are fixed to different ones of the plurality of organic molecule probe disposition regions disposed on the second main side.

17. A method of manufacturing semiconductor device for detecting organic molecules, comprising:
forming on a semiconductor substrate a plurality of photoelectric converters disposed on a first main side of the semiconductor substrate; and
forming a plurality of organic molecule probe disposition regions on a second main side in alignment with the photoelectric converters.

18. The method claim 17 in which the plurality of the photoelectric converters are disposed on the first main side as a CCD solid-state imaging device.

19. The method of claim 17 further comprising forming optical filters in at least the organic molecule probe disposition regions on the second main side of the semiconductor substrate.

20. The method of claim 17 further comprising forming a plurality of recesses corresponding to the organic molecule probe disposition regions on the second main side.

21. The method of claim 20 further comprising forming optical filters in at least the organic molecule probe disposition regions on the second main side of the semiconductor substrate.

## Patentansprüche

1. Ein Halbleiterelement, das mit einem Halbleitersubstrat zum Detektieren organischer Moleküle gebildet wird, wobei das Halbleiterelement einen photoelektrischen Umwandler und einen organischen Molekülsonden-Anordnungsbereich aufweist, wobei
der photoelektrische Umwandler auf einer ersten Hauptseite des Halbleitersubstrates angeordnet ist und ein organischer Molekülsonden-Anordnungsbereich auf einer zweiten Hauptseite des Halbleitersubstrates angeordnet ist.

2. Das Halbleiterelement nach Anspruch 1, das weiter umfasst:
einen optischen Filter, der auf der zweiten Hauptseite an wenigstens dem Ort gebildet wird, der mit dem organischen Molekülsonden-Anordnungsbereich übereinstimmt.

3. Das Halbleiterelement nach Anspruch 2, in dem das Halbleitersubstrat eine Dicke des organischen Molekülsonden-Anordnungsbereiches auf der zweiten Hauptseite gegenüber dem photoelektrischen Umwandler auf der ersten Hauptseite aufweist, die entsprechend der Tiefe einer CCD-Potentialsenke bestimmt wird.

4. Das Halbleiterelement nach Anspruch 1, in dem das Halbleitersubstrat eine Dicke des organischen Molekülsonden-Anordnungsbereiches auf der zweiten Hauptseite gegenüber dem photoelektrischen Umwandler auf der ersten Hauptseite aufweist, die entsprechend der Tiefe einer CCD-Potentialsenke bestimmt wird.

5. Ein Halbleitervorrichtung, die mit einem Halbleitersubstrat zum Detektieren organischer Moleküle gebildet wird, die umfasst:
eine Vielzahl von photoelektrischen Umwandlern, die auf einer ersten Hauptseite des Halbleitersubstrates angeordnet sind, und organische Molekülsonden-Anordnungsbereiche, die auf der zweiten Hauptseite in Ausrichtung mit den photoelektrischen Umwandlern bereitgestellt werden.

6. Die Halbleitervorrichtung nach Anspruch 5, in dem das Halbleitersubstrat einen photoelektrischen Umwandlungsbereich einschließt, in dem die Mehrheit der photoelektrischen Umwandler auf der ersten Hauptseite als CCD-Festkörperbildvorrichtung angeordnet sind.

7. Die Halbleitervorrichtung nach Anspruch 6, die weiter einen optischen Filter umfasst, der wenigstens in den organischen Molekülsonden-Anordnungsbereichen auf der zweiten Hauptseite des Halbleitersubstrates gebildet wird.

8. Die Halbleitervorrichtung nach Anspruch 7, die weiter eine Vielzahl von den organischen Molekülsonden-Anordnungsbereichen entsprechenden Vertiefungen umfasst, die auf der zweiten Hauptseite bereitgestellt werden.

9. Die Halbleitervorrichtung nach Anspruch 6, die weiter eine Vielzahl von den organischen Molekülsonden-Anordnungsbereichen entsprechenden Vertiefungen umfasst, die auf der zweiten Hauptseite bereitgestellt werden.

10. Die Halbleitervorrichtung nach Anspruch 5, die weiter einen optischen Filter umfasst, der wenigstens in den organischen Molekülsonden-Anordnungsbereichen auf der zweiten Hauptseite des Halbleitersubstrats gebildet wird.

11. Die Halbleitervorrichtung nach Anspruch 5, die weiter eine Vielzahl von den organischen Molekülsonden-Anordnungsbereichen entsprechenden Vertiefungen umfasst, die auf der zweiten Hauptseite bereitgestellt werden.

12. Ein Verfahren zum Messen organischer Moleküle unter Verwendung einer Halbleitervorrichtung wie in Anspruch 5 rezitiert, das die Schritte umfasst:
Fixieren wenigstens eines Typs einer organischen Molekülsonde im organischen Molekülsonden-Anordnungsbereich auf der zweiten Hauptseite;
Platzieren einer fluoreszenzmarkierten Probe auf der zweiten Hauptseite und Binden eines Zieles in der Probe, das eine Molekularstruktur aufweist, die der organischen Molekülsonde entspricht, an die organische Molekülsonde;
Bestrahlen der zweiten Hauptseite, an die die organische Molekülsonde fixiert worden ist, mit Anregungslicht; und
Detektieren des Fluoreszenzlichtes, das durch Bestrahlen mit dem Anregungslicht durch die photoelektrischen Umwandler, die auf der ersten Hauptseite angeordnet sind, erzeugt wird und Ausgabe eines optischen Signals.

13. Ein Verfahren zum Messen organischer Moleküle unter Verwendung einer Halbleitervorrichtung, wie in Anspruch 6 rezitiert, das die Schritte umfasst:
Fixieren wenigstens einer organischen Molekülsonde im organischen Molekülsonden-Anordnungsbereich auf der zweiten Hauptseite;
Platzieren einer fluoreszenzmarkierten Probe auf der zweiten Hauptseite und Binden eines Ziels in der Probe, das eine Molekularstruktur aufweist, die der organischen Molekülsonde entspricht, an die organische Molekülsonde;
Bestrahlen der zweiten Hauptseite, an die die organische Molekülsonde fixiert worden ist, mit Anregungslicht; und
Detektieren des Fluoreszenzlichtes, das durch Bestrahlen mit dem Anregungslicht durch die photoelektrischen Umwandler, die auf der ersten Hauptseite angeordnet sind, erzeugt wird und Ausgabe eines optischen Signals.

14. Ein Verfahren zum Messen organischer Moleküle unter Verwendung einer Halbleitervorrichtung, wie in Anspruch 7 rezitiert, das die Schritte umfasst:
Fixieren wenigstens eines Typs einer organischen Molekülsonde im organischen Molekülsonden-Anordnungsbereich auf der zweiten Hauptseite;
Platzieren einer fluoreszenzmarkierten Sonde auf der zweiten Hauptseite und Binden eines Ziels in der Probe, das eine Molekularstruktur aufweist, die der organischen Molekülsonde entspricht, an eine organische Molekülsonde;
Bestrahlen der zweiten Hauptseite, an die die organische Molekülsonde fixiert worden ist, mit Anregungslicht; und
Detektieren des Fluoreszenzlichtes, das durch Bestrahlen mit dem Anregungslicht durch die photoelektrischen Umwandler, die auf der ersten Hauptseite angeordnet sind, erzeugt wird und Ausgabe eines optischen Signals.

15. Ein Verfahren zum Messen organischer Moleküle unter Verwendung einer Halbleitervorrichtung, wie in Anspruch 8 rezitiert, das die Schritte umfasst:
Fixieren wenigstens eines Typs einer organischen Molekülsonde im organisch Molekülsonden-Anordnungsbereich auf der zweiten Hauptseite;
Platzieren einer fluoreszenzmarkierten Sonde auf der zweiten Hauptseite und Binden eines Ziels in der Probe, das eine Molekularstruktur aufweist, die der organischen Molekülsonde entspricht, an eine organische Molekülsonde;
Bestrahlen der zweiten Hauptseite, an die die organische Molekülsonde fixiert worden ist, mit Anregungslicht; und
Detektieren des Fluoreszenzlichtes, das durch Bestrahlen mit dem Anregungslicht durch die photoelektrischen Umwandler, die auf der ersten Hauptseite angeordnet sind, erzeugt wird und Ausgabe eines optischen Signals.

16. Das Verfahren zum Messen organischer Moleküle nach Anspruch 12, in dem organische Molekülsonden mit verschiedenen Molekularstrukturen an Andere von mehreren organischen Molekülsonden-Anordnungsbereichen, die auf der zweiten Hauptseite angeordnet sind, fixiert werden.

17. Ein Verfahren zum Herstellen einer Halbleitervorrichtung zum Detektieren organischer Moleküle, das umfasst:
Ausbilden einer Vielzahl von photoelektrischen Umwandlern auf einem Halbleitersubstrat, die auf einer ersten Hauptseite des Halbleitersubstrates angeordnet sind; und
Ausbilden einer Vielzahl von organischen Molekülsonden-Anordnungsbereichen auf einer zweiten Hauptseite in Ausrichtung mit den photoelektrischen Umwandlern.

18. Das Verfahren nach Anspruch 17, in dem die Mehrheit der photoelektrischen Umwandler auf der ersten Hauptseite als eine CCD-Festkörperbildvorrichtung angeordnet ist.

19. Das Verfahren nach Anspruch 17, das weiter das Bilden optischer Filter in wenigstens den organischen Molekülsonden-Anordnungsbereichen auf der zweiten Hauptseite des Halbleitersubstrates umfasst.

20. Das Verfahren nach Anspruch 17, das weiter das Ausbilden einer Vielzahl von Vertiefungen, die mit den organischen Molekülsonden-Anordnungsbereichen auf der zweiten Hauptseite übereinstimmen, umfasst.

21. Das Verfahren nach Anspruch 20, das weiter das Ausbilden optischer Filter in wenigstens den organischen Molekülsonden-Anordnungsbereichen auf der zweiten Hauptseite des Halbleitersubstrates umfasst.

## Revendications

1. Élément semi-conducteur formé avec un substrat semi-conducteur pour détecter des molécules organiques, l'élément semi-conducteur ayant un convertisseur photoélectrique et une région de disposition de sonde de molécule organique, dans lequel
le convertisseur photoélectrique est disposé sur un premier côté principal du substrat semi-conducteur et une région de disposition de sonde de molécule organique est disposée sur un deuxième côté principal du substrat semi-conducteur.

2. Élément semi-conducteur selon la revendication 1, comprenant en outre :
un filtre optique formé sur le deuxième côté principal au moins au niveau de l'emplacement correspondant à la région de disposition de sonde de molécule organique.

3. Élément semi-conducteur selon la revendication 2, dans lequel le substrat semi-conducteur a une épaisseur depuis la région de disposition de sonde de molécule organique sur le deuxième côté principal jusqu'au convertisseur photoélectrique sur le premier côté principal déterminée en fonction de la profondeur d'un puits de potentiel CCD.

4. Élément semi-conducteur selon la revendication 1, dans lequel le substrat semi-conducteur a une épaisseur depuis la région de disposition de sonde de molécule organique sur le deuxième côté principal jusqu'au convertisseur photoélectrique sur le premier côté principal déterminée en fonction de la profondeur d'un puits de potentiel CCD.

5. Dispositif semi-conducteur formé avec un substrat semi-conducteur pour détecter des molécules organiques, comprenant :
une pluralité de convertisseurs photoélectriques disposés sur un premier côté principal du substrat semi-conducteur et des régions de disposition de sonde de molécule organique placées sur un deuxième côté principal en alignement avec les convertisseurs photoélectriques.

6. Dispositif semi-conducteur selon la revendication 5, dans lequel le substrat semi-conducteur comprend une région de convertisseur photoélectrique dans laquelle la pluralité des convertisseurs photoélectriques est disposée sur le premier côté principal sous la forme d'un dispositif d'imagerie CCD à l'état solide.

7. Dispositif semi-conducteur selon la revendication 6, comprenant en outre un filtre optique formé dans au moins les régions de disposition de sonde de molécule organique sur le deuxième côté principal du substrat semi-conducteur.

8. Dispositif semi-conducteur selon la revendication 7, comprenant en outre une pluralité de renfoncements correspondant aux régions de disposition de sonde de molécule organique sur le deuxième côté principal.

9. Dispositif semi-conducteur selon la revendication 6, comprenant en outre une pluralité de renfoncements correspondant aux régions de disposition de sonde de molécule organique sur le deuxième côté principal.

10. Dispositif semi-conducteur selon la revendication 5, comprenant en outre un filtre optique formé dans au moins les régions de disposition de sonde de molécule organique sur le deuxième côté principal du substrat semi-conducteur.

11. Dispositif semi-conducteur selon la revendication 5, comprenant en outre une pluralité de renfoncements correspondant aux régions de disposition de sonde de molécule organique sur le deuxième côté principal.

12. Procédé de mesure de molécules organiques en utilisant un dispositif semi-conducteur tel que décrit dans la revendication 5, comprenant les étapes de :
fixation d'au moins un type de sonde de molécule organique dans la région de disposition de sonde de molécule organiques sur le deuxième côté principal ;
placement d'un échantillon marqué par fluorescence sur le deuxième côté principal et liaison à la sonde de molécule organique d'une cible dans l'échantillon ayant une structure moléculaire correspondant à la sonde de molécule organique ;
irradiation avec une lumière d'excitation du deuxième côté principal auquel la sonde de molécule organique a été fixée ; et
détection de la lumière fluorescente produite par irradiation avec la lumière d'excitation au moyen des convertisseurs photoélectriques disposés sur le premier côté principal, et émission d'un signal optique.

13. Procédé de mesure de molécules organiques en utilisant un dispositif semi-conducteur tel que décrit dans la revendication 6, comprenant les étapes de :
fixation d'au moins un type de sonde de molécule organique dans la région de disposition de sonde de molécule organique sur le deuxième côté principal ;
placement d'un échantillon marqué par fluorescence sur le deuxième côté principal et liaison à la sonde de molécule organique d'une cible dans l'échantillon ayant une structure moléculaire correspondant à la sonde de molécule organique ;
irradiation avec une lumière d'excitation du deuxième côté principal auquel la sonde de molécule organique a été fixée ; et
détection de la lumière fluorescente produite par irradiation avec la lumière d'excitation au moyen des convertisseurs photoélectriques disposés sur le premier côté principal, et émission d'un signal optique.

14. Procédé de mesure de molécules organiques en utilisant un dispositif semi-conducteur tel que revendiqué dans la revendication 7, comprenant les étapes de :
fixation d'au moins un type de sonde de molécule organique dans la région de disposition de sonde de molécule organique sur le deuxième côté principal ;
placement d'un échantillon marqué par fluorescence sur le deuxième côté principal et liaison à la sonde de molécule organique d'une cible dans l'échantillon ayant une structure moléculaire correspondant à la sonde de molécule organique ;
irradiation avec une lumière d'excitation du deuxième côté principal auquel la sonde de molécule organique a été fixée ; et
détection de la lumière fluorescente produite par irradiation avec la lumière d'excitation au moyen des convertisseurs photoélectriques disposés sur le premier côté principal, et émission un signal optique.

15. Procédé de mesure de molécules organiques en utilisant un dispositif semi-conducteur tel que revendiqué dans la revendication 8, comprenant les étapes de :
fixation d'au moins un type de sonde de molécule organique dans la région de disposition de sonde de molécule organique sur le deuxième côté principal ;
placement d'un échantillon marqué par fluorescence sur le deuxième côté principal et liaison à la sonde de molécule organique d'une cible dans l'échantillon ayant une structure moléculaire correspondant à la sonde de molécule organique ;
irradiation avec une lumière d'excitation du deuxième côté principal auquel la sonde de molécule organique a été fixée ; et
détection de la lumière fluorescente produite par irradiation avec la lumière d'excitation au moyen des convertisseurs photoélectriques disposés sur le premier côté principal, et émission un signal optique.

16. Procédé de mesure de molécules organiques selon la revendication 12, dans lequel des sonde de molécule organique ayant différentes structures moléculaires sont fixées à différentes régions de la pluralité de régions de disposition de sonde moléculaire organique disposées sur le deuxième côté principal.

17. Procédé de fabrication de dispositif semi-conducteur pour détecter des molécules organiques, comprenant :
la formation sur un substrat semi-conducteur d'une pluralité de convertisseurs photoélectriques disposés sur un premier côté principal du substrat semi-conducteur ; et
la formation d'une pluralité de régions de disposition de sonde molécule organique sur un deuxième côté principal en alignement avec les convertisseurs photoélectriques.

18. Procédé selon la revendication 17, dans lequel la pluralité des convertisseurs photoélectriques est disposée sur le premier côté principal sous la forme d'un dispositif d'imagerie CCD à l'état solide.

19. Procédé selon la revendication 17, comprenant en outre la formation de filtres optiques dans au moins les régions de disposition de sonde de molécule organique sur le deuxième côté principal du substrat semi-conducteur.

20. Procédé selon la revendication 17, comprenant en outre la formation d'une pluralité de renfoncements correspondant aux régions de disposition de sonde de molécule organique sur le deuxième côté principal.

21. Procédé selon la revendication 20, comprenant en outre la formation de filtres optiques dans au moins les régions de disposition de sonde de molécule organique sur le deuxième côté principal du substrat semi-conducteur.
